# EUROPÄISCHE PATENTSCHRIFT

(11) **EP 0 565 851 B1**
(45) Veröffentlichungstag und Bekanntmachung des Hinweises auf die Patenterteilung: **18.01.1995**
(21) Anmeldenummer: 93103634.7
(22) Anmeldetag: 06.03.1993
(51) Int. Cl.: G01F 1/66

(54) **Ultraschall-Messwertgeber zur Bestimmung der Durchflussmenge einer strömenden Flüssigkeit**
Ultrasonic transducer for liquid flow measurement
Capteur ultrasonique pour la détermination du débit d'un liquide en écoulement

(30) Priorität: 14.04.1992 CH 1236/92
(43) Veröffentlichungstag der Anmeldung: 20.10.1993
(73) Patentinhaber: Landis & Gyr Technology Innovation AG, 6301 Zug (CH)
(72) Erfinder: Hauenstein, Günther, W-6457 Hochstadt (DE); Schupp, Horst, W-6103 Griesheim (DE); Steghaus, Michael, W-6000 Frankfurt (DE)
(74) Vertreter: Müller, Hans-Jürgen, Dipl.-Ing.

(56) Entgegenhaltungen:
- EP-A- 0 202 583
- EP-A- 0 249 689
- WO-A-86/02723
- DE-A- 3 100 777

## Beschreibung

Die Erfindung bezieht sich auf einen Meßwertgeber zur Bestimmung der Durchflußmenge der im Oberbegriff des Anspruchs 1 genannten Art.

Solche Meßwertgeber eignen sich beispielsweise zur Erfassung von Strömungsgeschwindigkeiten und darauf aufbauend zur Erfassung von Durchflußmengen und in Kombination mit Temperaturdifferenzmessungen zur Wärmeverbrauchserfassung und -verrechnung.

Es ist ein Meßwertgeber dieser Art bekannt (CH-PS 648 932), bei dem zur Bestimmung der Durchflußmenge einer durch ein Rohrsystem strömenden Flüssigkeit durch Messung der mittleren Geschwindigkeit mit Hilfe von Ultraschall-Signalen ein Meßrohr vorhanden ist, durch das die Flüssigkeit strömt. Um das Strömungsprofil im Hinblick auf eine hohe Meßgenauigkeit günstig zu beeinflussen, weisen die Enden des Meßrohres Anordnungen auf, die ein bestimmtes Turbulenzprofil erzeugen. Solche Anordnungen können aus Schlitzen oder Löchern in der Wand des Meßrohres bestehen.

Es hat sich gezeigt, daß es schwierig ist, ein über den ganzen vorgesehenen Meßbereich des Meßwertgebers - vom geforderten Anlaufwert bis zum Auslegungs-Nennwert - annähernd gleiches Turbulenzprofil zu erzeugen. Mängel am Turbulenzprofil führen aber zu unzureichender Meßgenauigkeit.

Der Erfindung liegt die Aufgabe zugrunde, die Meßgenauigkeit eines Meßwertgebers der eingangs genannten Art zu verbessern. Verbesserte Meßgenauigkeit bedeutet andererseits einen vergrößerten Meßbereich einer bestimmten Genauigkeitsklasse.

Die genannte Aufgabe wird erfindungsgemäß durch die Merkmale des Anspruchs 1 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:
- Fig. 1: eine perspektivische Ansicht eines Endes eines Meßrohrs,
- Fig. 2: eine Seitenansicht des Meßrohres,
- Fig. 3a: eine Draufsicht auf das Ende eines Meßrohres,
- Fig. 3b: den Querschnitt eines Steges am Ende eines Meßrohres,
- Fig. 4: eine Ansicht eines Schnitts durch das Ende eines auf ein Meßrohres aufsteckbaren Teils und
- Fig. 5: eine perspektivische Ansicht dieses Teils.

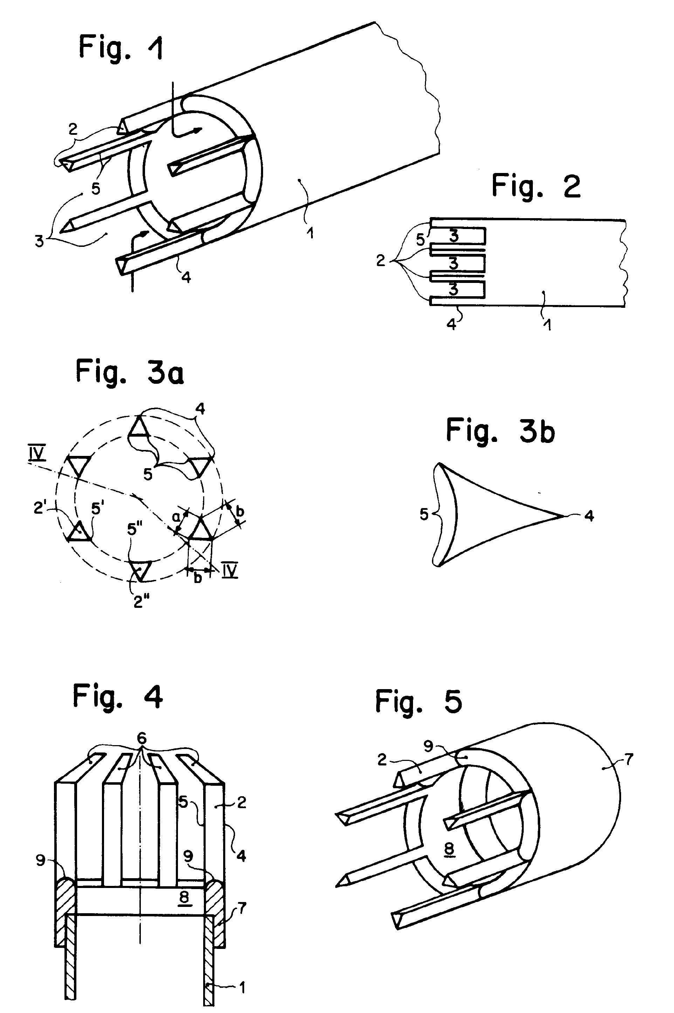

In der Fig. 1 bedeutet 1 ein üblicherweise aus Metall, zum Beispiel Stahl, bestehendes Meßrohr, an dessen Ende sich Stege 2 befinden. Zwischen den Stegen 2 befinden sich Zwischenräume 3, durch die die Flüssigkeit, deren Strömungsgeschwindigkeit gemessen werden soll, in radialer Richtung - wie durch Pfeile angedeutet - hindurchtreten und somit in das Meßrohr 1 einfließen kann. Die Stege 2 stellen eine Verlängerung der Rohrwandung des Meßrohres 1 dar und reichen bis unmittelbar an die Oberfläche des nicht dargestellten Meßwandlers heran, der dem Ende des Meßrohres 2 gegenüber liegt.

Jeder der Stege 2 weist eine Anströmkante 4 und zwei Abrißkanten 5 auf. Beim Durchtritt der Flüssigkeit durch die Zwischenräume 3 vergrößert sich infolge des abnehmenden Abstands zwischen den die Zwischenräume 3 begrenzenden Stegen 2 die Geschwindigkeit der Flüssigkeit. An den Abrißkanten 5 bilden sich Wirbel. Dadurch wird die bei niedrigen Geschwindigkeiten laminare Strömung turbulent.

Zur Verdeutlichung ist als Fig. 2 eine Seitenansicht gezeigt, bei der gleiche Bezugszahlen gleiche Teile bedeuten. Dies gilt auch für die Fig. 3a, die eine Draufsicht auf das Ende eines Meßrohres 1 zeigt, und alle weiteren Figuren.

Dadurch, daß jeder Steg 2 eine einzige Anströmkante 4 besitzt, wird erreicht, daß der Strömungswiderstand der Anordnung gering ist.

Dadurch, daß jeder Steg 2 zwei Abrißkanten 5 besitzt, wird erreicht, daß die Strömung hier gebrochen und somit turbulent wird.

Vorteilhaft sind die beiden Abrißkanten 5 jedes Stegs 2 gleich geformt und zueinander spiegelbildlich. Durch die Anordnung mehrerer Stege 2 in der Verlängerung des Meßrohres 1 liegen sich gleich geformte Abrißkanten 5 zweier benachbarter Stege 2 gegenüber, wobei die eine Abrißkante 5′ des einen Stegs 2′ und die gegenüberliegende Abrißkante 5˝ des benachbarten Stegs 2˝ zueinander spiegelbildlich sind. Dadurch wird erreicht, daß die sich aus dem Strömungsabriß ergebende Turbulenz keinen Drall der gesamten Flüssigkeitssäule erzeugen kann. Ein solcher Drall wäre nachteilig für die Meßgenauigkeit.

Vorteilhaft sind die Flächen zwischen der Anströmkante 4 und den Abrißkanten 5 jedes Stegs 2 konkav gewölbt (Fig. 3b). Durch die progressive Verengung der Zwischenräume 3 beim Durchtritt der Flüssigkeit kommt es zu einer progressiven Geschwindigkeitssteigerung, was die Turbulenz erhöht.

Vorteilhaft ist auch an jedem Steg 2 die Fläche zwischen den beiden Abrißkanten 5 konkav gewölbt. Auch diese Maßnahme verstärkt die Turbulenz.

Bei der Dimensionierung der Stege 2 im Verhältnis zur gesamten in der Verlängerung des Meßrohres 1 liegenden Mantelfläche ist abzuwägen, daß einerseits eine genügende Turbulenz erzeugt wird, ohne daß gleichzeitig der Strömungswiderstand zu groß wird. Es hat sich als vorteilhaft erwiesen, wenn die Zwischenräume 3 zwischen den Stegen 2 etwa 60 bis 90 % der gesamten in der Verlängerung des Meßrohres 1 liegenden Mantelfläche ausmachen. Die Zahl der Stege 2 und deren Dimensionierung richtet sich in erster Linie nach den Dimensionen des Meßrohres 1. Bei einem Durchmesser des Meßrohres 1 von 30 mm können beispielsweise acht Stege 2 vorhanden sein, die gleichmäßig über den Umfang des Endes des Meßrohres 1 verteilt sind. Bei jedem Steg 2 mißt beispielsweise der Abstand a zwischen den beiden Abrißkanten 5 etwa 4,5 mm. Die Abstände b zwischen Anströmkante 4 und den beiden Abrißkanten 5 haben mit beispielsweise 5 mm die gleiche Größenordnung. Je nach Gestalt der Einströmkammer im Gehäuse des Durchflußmessers können die einzelnen Stege 2 auch ungleichmäßig über den Umfang verteilt sein. Die Länge eines Stegs 2 kann beispielsweise 20 mm betragen.

Wesentlich ist, daß die Stege 2 außerhalb der vom Meßwandler auf das Meßrohr 1 gerichteten Schallkeule liegen, so daß sie die Schallausbreitung nicht behindern.

Damit möglichst der gesamte Flüssigkeitsstrom von den Turbulenz erzeugenden Abrißkanten 5 beeinflußt wird, ist es vorteilhaft, daß die dem Ende des Meßrohres 1 abgewandten Enden der Stege 2 mindestens bis nahe an die Oberfläche des in den Figuren nicht dargestellten, dem Ende des Meßrohres 1 gegenüberliegenden Meßwandlers reichen.

Vorteilhaft ist es, wenn die Enden der Stege 2 federbeinartige Verlängerungen 6 (Fig. 4) aufweisen, die unmittelbar auf der Oberfläche des Meßwandlers aufliegen. Diese Verlängerungen 6 können beispielsweise schräg auf den Enden der Stege 2 angeordnet sein und einen über ihre Länge abnehmenden Querschnitt besitzen, um optimale Federeigenschaften zu erreichen. Die Verlängerungen 6 sind so angeordnet, daß sie die Schallkeule des Meßwandlers nicht beeinträchtigen. Durch die Verlängerungen 6 wird einerseits erreicht, daß infolge von thermischer Dilatation keine unzulässig hohen mechanischen Drücke auf die Oberfläche des Meßwandlers entstehen können. Andererseits wird gleichwohl ein gewisser Druck aufgebaut, der der Vakuumfestigkeit des Meßwertgebers zugutekommt, indem die Verlängerungen 6 den Meßwandler abstützen.

Vorteilhaft ist es wenn, wenn gemäß Fig. 4 und 5 die Stege 2 auf ihrer dem Meßrohr 1 zugewandten Seite durch einen Ring 7 verbunden sind und daß das aus Stegen 2 und Ring 7 bestehende Teil 8 als auf das Ende des Meßrohres 1 aufsteckbares Teil gefertigt ist. Mit Hilfe solcher aufsteckbaren Teile 8 können bereits vorhandene Meßwertgeber nachgerüstet werden, so daß deren Genauigkeit auf einfache Weise gesteigert werden kann. So ist es beispielsweise möglich, bei einem bestehenden Durchflußmesser, dessen sogenannter Anlaufwert bei 0,3 % des Nenndurchflusses liegt, diesen Anlaufwert auf 0,03 % zu verbessern. Ist bei einem gegebenen Durchflußmesser der Abstand zwischen dem Ende des Meßrohres 1 und der Oberfläche des Meßwandlers gering, so kann ein Austausch des Meßrohres 1 gegen ein kürzeres angezeigt sein.

Vorteilhaft ist gleichfalls, wenn jene Flächen des Rings 7, die sich zwischen den Stegen 2 befinden, verrundete Kanten aufweisen. An der Basis der Stege 2 weist der Ring 7 gemäß Fig. 4 gewölbte Flächen 9 auf.

Hinsichtlich der Erzielung einer kostengünstigen Fertigung ist es vorteilhaft, wenn das aus Stegen 2 und Ring 7 bestehende Teil aus einem spanlos verformbaren Kunststoff besteht.

Bei der Wahl des Materials für dieses Teil ist die Einsatztemperatur des Meßwertgebers zu berücksichtigen. Zusätzlich besteht die Möglichkeit, über die Wahl des Materials auf die Ausbreitung des Ultraschalls Einfluß zu nehmen. So kann es zweckmäßig sein, ein solches Material zu verwenden, das Ultraschall stark absorbiert. Auf diese Weise können störende Reflexionen des Ultraschalls vermindert werden. Andererseits kann mit Hilfe eines Ultraschall stark reflektierenden Materials Einfluß auf die Gestalt der Ultraschall-Strahlungskeule genommen werden.

Es ist zweckmäßig, wenn die beiden Enden des Meßrohres 1 mit den erwähnten Stegen 2 ausgestattet werden. Dies ist vor allem dann geboten, wenn im Zusammenhang mit der Anordnung federbeinartiger Verlängerungen 6 die Vakuumfestigkeit des Meßwertgebers gesteigert werden soll. Die beiden sich gegenüber liegenden Meßwandler werden dann über das Meßrohr 1 und die an seinen beiden Enden aufgesetzten Teile 8 mit den federbeinartigen Verlängerungen 6 abgestützt.

Alternativ ist es auch möglich, das gesamte Meßrohr 1 mitsamt den an den beidseitigen Enden vorhandenen Stegen 2 als ein einziges Spritzteil aus Kunststoff zu fertigen. Damit die Innenwandung ultraschallreflektierend ist, kann dabei das Innere des Meßrohres 1 aus Metall, z.B. stahl, bestehen. Fertigungstechnisch kann das dadurch erzielt werden, daß ein Metallrohr mit Kunststoff umspritzt wird, oder daß in das aus Kunststoff bestehende Meßrohr 1 ein Metallrohr eingeschoben wird.

Meßwertgeber mit den erfindungsgemäßen Merkmalen lassen sich besonders vorteilhaft im Zusammenhang mit der Messung von Wärmeströmen bei Heizungsanlagen einsetzen. Beim Durchtritt der Wärmeträgerflüssigkeit durch die Turbulenz erzeugende Anordnung wird diese vermischt. Eine Temperaturschichtung, wie sie besonders bei geringer Strömungsgeschwindigkeit vorkommen kann, indem die Flüssigkeit im Bereich der Rohrwandung kälter ist als die Flüssigkeit im Zentrum der Flüssigkeitssäule, wird beseitigt. Auch dies verbessert die Meßgenauigkeit.

## Patentansprüche

1. Meßwertgeber zur Bestimmung der Durchflußmenge einer durch ein Rohrsystem strömenden Flüssigkeit durch Messung der mittleren Durchflußgeschwindigkeit mit Hilfe von Ultraschall-Signalen, bei dem die Flüssigkeit durch ein Meßrohr (1) strömt, dessen Enden gegenüberliegend beidseitig je ein mit der Flüssigkeit in unmittelbarer Berührung stehender Meßwandler angeordnet ist, wobei mindestens eines der Enden des Meßrohres (1) das Strömungsprofil der Flüssigkeit beeinflussende Anordnungen aufweisen, dadurch gekennzeichnet,
- daß diese Anordnungen aus eine Verlängerung der Rohrwandung des Meßrohres (1) darstellenden Stegen (2) bestehen, zwischen denen Zwischenräume (3) vorhanden sind, durch die die Flüssigkeit hindurchtritt,
- daß jeder Steg (2) eine einzige Anströmkante (4) besitzt und
- daß jeder Steg (2) zwei Abrißkanten (5) aufweist.

2. Meßwertgeber nach Anspruch 1, dadurch gekennzeichnet, daß die beiden Abrißkanten (5) jedes Stegs (2) gleich geformt und zueinander spiegelbildlich sind.

3. Meßwertgeber nach Anspruch 1 oder 2, dadurch gekennzeichnet, daß die Flächen zwischen der Anströmkante (4) und den Abrißkanten (5) jedes Stegs (2) konkav gewölbt sind.

4. Meßwertgeber nach einem der Ansprüche 1 bis 3, dadurch gekennzeichnet, daß die Fläche zwischen den beiden Abrißkanten (5) jedes Stegs (2) konkav gewölbt ist.

5. Meßwertgeber nach einem der Ansprüche 1 bis 4, dadurch gekennzeichnet, daß die Zwischenräume (3) zwischen den Stegen (2) 60 bis 90 % der gesamten in der Verlängerung des Meßrohres (1) liegenden Mantelfläche ausmachen.

6. Meßwertgeber nach einem der Ansprüche 1 bis 5, dadurch gekennzeichnet, daß die dem, Ende des Meßrohres (1) abgewandten Enden der Stege (2) mindestens bis nahe an die Oberfläche des Meßwandlers reichen.

7. Meßwertgeber nach Anspruch 6, dadurch gekennzeichnet, daß die Enden der Stege (2) federbeinartige Verlängerungen (6) aufweisen, die unmittelbar auf der Oberfläche des Meßwandlers aufliegen.

8. Meßwertgeber nach einem der Ansprüche 1 bis 7, dadurch gekennzeichnet, daß die Stege (2) auf ihrer dem Meßrohr (1) zugewandten Seite durch einen Ring (7) verbunden sind und daß das aus Stegen (2) und Ring (7) bestehende Teil (8) als auf das Ende des Meßrohres (1) aufsteckbares Teil gefertigt ist.

9. Meßwertgeber nach Anspruch 8, dadurch gekennzeichnet, daß jene Flächen des Rings (7), die sich zwischen den Stegen (2) befinden, verrundete Kanten aufweisen.

10. Meßwertgeber nach Anspruch 8 oder 9, dadurch gekennzeichnet, daß das aus Stegen (2) und Ring (7) bestehende Teil (8) aus einem spanlos verformbaren Kunststoff besteht.

## Claims

1. A sensor for determining the quantitative flow rate of a fluid flowing through a pipe system by measurement of the mean flow speed by means of ultrasonic signals, in which the fluid flows through a measuring pipe (1), a respective measuring transducer being arranged opposite each of the ends of the measuring pipe at both sides and being in direct contact with the fluid, wherein at least one of the ends of the measuring pipe (1) has arrangements for influencing the flow profile of the fluid, characterised in that
- said arrangements comprise limbs (2) which represent a prolongation of the wall of the measuring pipe (1) and between which there are intermediate spaces (3) through which the fluid passes,
- each limb (2) has a single flow-encountering leading edge (4), and
- each limb (2) has two flow-separation edges (5).

2. A sensor according to claim 1 characterised in that the two flow-separation edges (5) of each limb (2) are of the same shape and are of mirror-image configuration relative to each other.

3. A sensor according to claim 1 or claim 2 characterised in that the surfaces between the flow-encountering leading edge (4) and the flow-separation edges (5) of each limb (2) are concavely curved.

4. A sensor according to one of claims 1 to 3 characterised in that the surface between the two flow-separation edges (5) of each limb (2) is concavely curved.

5. A sensor according to one of claims 1 to 4 characterised in that the intermediate spaces (3) between the limbs (2) constitute from 60 to 90% of the total peripheral surface area in the prolongation of the measuring pipe (1).

6. A sensor according to one of claims 1 to 5 characterised in that the ends of the limbs (2), which are remote from the end of the measuring pipe (1), extend to at least close to the surface of the measuring transducer.

7. A sensor according to claim 6 characterised in that the ends of the limbs (2) have spring leg-like prolongations (6) which lie directly on the surface of the measuring transducer.

8. A sensor according to one of claims 1 to 7 characterised in that the limbs (2) are connected by a ring (7) on their side which is towards the measuring pipe (1) and that the portion (8) consisting of limbs (2) and ring (7) is produced as a portion which can be fitted on to the end of the measuring pipe (1).

9. A sensor according to claim 8 characterised in that the surfaces of the ring (7), which are between the limbs (2), have rounded edges.

10. A sensor according to claim 8 or claim 9 characterised in that the portion (8) consisting of limbs (2) and ring (7) comprises a plastics material which can be subjected to non-cutting shaping.

## Revendications

1. Capteur de mesure pour la détermination du débit d'un liquide circulant dans un système de tuyauterie par mesure de la vitesse moyenne de la circulation à l'aide de signaux ultrasonores, dans lequel le liquide circule dans un tube de mesure (1) en face de chacune des extrémités duquel est disposé de part et d'autre un transducteur qui est en contact direct avec le liquide, au moins une des extrémités du tube de mesure (1) comportant des dispositions qui influent sur le profil de la circulation du liquide, caractérisé
- en ce que ces dispositions consistent en barreaux (2) qui représentent un prolongement de la cloison du tube de mesure (1) et entre lesquels se trouvent des espaces (3) par lesquels le liquide passe,
- en ce que chaque barreau (2) comporte une unique arête (4) attaquée par le flux et
- en ce que chaque barreau (2) comporte deux arêtes de décollement (5).

2. Capteur de mesure selon la revendication 1, caractérisé en ce que les deux arêtes de décollement (5) de chaque barreau (2) ont la même forme et sont spéculaires.

3. Capteur de mesure selon la revendication 1 ou 2, caractérisé en ce que les surfaces comprises entre l'arête (4) attaquée par le flux et les arêtes de décollement (5) de chaque barreau (2) présentent une courbure concave.

4. Capteur de mesure selon l'une des revendications 1 à 3, caractérisé en ce que la surface comprise entre les deux arêtes de décollement (5) de chaque barreau (2) présente une courbure concave.

5. Capteur de mesure selon l'une des revendications 1 à 4, caractérisé en ce que les espaces (3) situés entre les barreaux (2) représentent 60 à 90% de la totalité de la surface d'enveloppe située dans le prolongement du tube de mesure (1).

6. Capteur de mesure selon l'une des revendications 1 à 5, caractérisé en ce que les extrémités des barreaux (2) tournées à l'opposé de l'extrémité du tube de mesure (1) atteignent au moins approximativement la surface du transducteur.

7. Capteur de mesure selon la revendication 6, caractérisé en ce que les extrémités des barreaux (2) comportent des prolongements (6) en forme de jambes de force à ressort qui reposent directement sur la surface du transducteur.

8. Capteur de mesure selon l'une des revendications 1 à 7, caractérisé en ce que les barreaux (2) sont reliés par un anneau (7) sur leur côté tourné vers le tube de mesure (1) et en ce que la pièce (8) se composant des barreaux (2) et de l'anneau (7) est réalisée sous la forme d'une pièce s'emboîtant sur l'extrémité du tube de mesure (1).

9. Capteur de mesure selon la revendication 8, caractérisé en ce que les surfaces de l'anneau (7) qui se trouvent entre les barreaux (2) comportent des arêtes arrondies.

10. Capteur de mesure selon la revendication 8 ou 9, caractérisé en ce que la pièce (8) se composant des barreaux (2) et de l'anneau (7) est en une matière plastique déformable sans enlèvement de copaux.
